# EUROPEAN PATENT SPECIFICATION

(11) **EP 4 485 632 B1**
(45) Date of publication and mention of the grant of the patent: **17.12.2025**
(21) Application number: 24168503.1
(22) Date of filing: 04.04.2024
(51) Int. Cl.: H01M 50/103, H01M 50/15, H01M 50/474, H01M 50/477, H01M 50/486, H01M 50/627, H01M 10/0587

(54) **ENERGY-STORAGE APPARATUS, ENERGY-STORAGE MODULE, AND ELECTRICITY-CONSUMPTION DEVICE**
ENERGIESPEICHERVORRICHTUNG, ENERGIESPEICHERMODUL UND ELEKTRIZITÄTSVERBRAUCHSVORRICHTUNG
APPAREIL DE STOCKAGE D'ÉNERGIE, MODULE DE STOCKAGE D'ÉNERGIE ET DISPOSITIF DE CONSOMMATION D'ÉLECTRICITÉ

(30) Priority: 29.06.2023 CN 202310791439
(43) Date of publication of application: 01.01.2025
(73) Proprietor: Hithium Tech HK Limited, Hong Kong (HK)
(72) Inventor: HU, Yuelin, Xiamen, 361100 (CN); XU, Weidong, Xiamen, 361100 (CN)
(74) Representative: Santarelli

(56) References cited:
- US-A1- 2017 331 090

## Description

### TECHNICAL FIELD

This disclosure relates to the field of energy-storage technology, and in particular, to an energy-storage apparatus, an energy-storage module, and an electricity-consumption device.

### BACKGROUND

Based on the design requirement of an energy-storage apparatus, some energy-storage apparatuses need to be laid flat while operating. When the energy-storage apparatus is laid flat, electrode assemblies inside the energy-storage apparatus are stacked. After an electrolyte in the energy-storage apparatus is consumed, a liquid level of the electrolyte may decrease. As a result, an electrode assembly located on an upper layer is unable to be infiltrated with the electrolyte, which affects usage performance of the energy-storage apparatus.

US2017331090A1 provides a secondary battery including: a housing, the housing being provided with an explosion proof valve at a bottom thereof; a cell pallet received in the housing and located at a bottom of the housing, the cell pallet being provided with a first through-hole and at least one grooves, the first through-hole being aligned with the explosion proof valve and extending through the cell pallet to communicate a space above the cell pallet and a space below the cell pallet, the at least one grooves being provided on an upper surface and/or a lower surface of the cell pallet, and the first through-hole communicating with at least one side edge of the cell pallet through the at least one grooves; a bare cell received in the housing and seated on the cell pallet; and a top cover assembled to a top side of the housing.

### SUMMARY

Aspects of the invention are set out in the appended claims.

According to the invention, a partition member is disposed to separate a first accommodating cavity into a first accommodating sub-cavity and a second accommodating sub-cavity that have different sizes. A difference between the gas pressure in the first accommodating sub-cavity and the gas pressure in the second accommodating sub-cavity results in a difference between the liquid-level height of the electrolyte in the first accommodating sub-cavity and the liquid-level height of the electrolyte in the second accommodating sub-cavity. In this way, a relatively high liquid level can be maintained in the smaller second accommodating sub-cavity, so as to realize continuous infiltration and replenishment for the second electrode assembly. Therefore, even if the liquid level of the electrolyte decreases, infiltration of the electrolyte into the electrode assembly away from the bottom surface remains unaffected, which significantly improves service life of the energy-storage apparatus.

### BRIEF DESCRIPTION OF THE DRAWINGS

In order to illustrate technical solutions in the disclosure more clearly, the following will give a brief introduction to the accompanying drawings required for describing implementations. Apparently, the accompanying drawings described below are merely some implementations of the disclosure. Based on these drawings, those of ordinary skilled in the art can also obtain other drawings without creative effort.
FIG. 1 is an application scenario view of a household energy-storage system provided in an embodiment of the disclosure.
FIG. 2 is a schematic structural view of an energy-storage apparatus provided in an embodiment of the disclosure.
FIG. 3 is an exploded structural view of the energy-storage apparatus illustrated in FIG. 2.
FIG. 4 is a schematic structural view of an electrode assembly illustrated in FIG. 3.
FIG. 5 is a schematic structural view of a partition member illustrated in FIG. 3.
FIG. 6 is a schematic structural view of a protection member illustrated in FIG. 3.
FIG. 7 is a schematic structural view illustrating fixed connection between a partition member and a protection member.
FIG. 8 is a schematic structural view of a housing illustrated in FIG. 3.
FIG. 9 is a perspective structural view illustrating part of the energy-storage apparatus illustrated in FIG. 2.
FIG. 10 is a schematic block diagram of an energy-storage module.
FIG. 11 is a schematic block diagram of an electricity-consumption device.

Reference signs: household energy-storage system 1000; energy-storage apparatus 100; electrical-energy conversion apparatus 200; customer load 300; end cover assembly 10; electrode assembly 20; partition member 30; protection member 40; housing 50; positive pole 11; negative pole 12; explosion-proof valve 13; main body 21; positive-electrode tab 22; negative-electrode tab 23; first end 24; second end 25; side portion 27; first electrode assembly 20A; second electrode assembly 20B; concave portion 26; first concave portion 26A; second concave portion 26B; bottom plate 31; top plate 32; side plate 33; through-recess 37; first sub-side-plate 33A; second sub-side-plate 33B; through-hole 34; first protrusion 35; first contact surface 351; second contact surface 352; second protrusion 36; third contact surface 361; fourth contact surface 362; first accommodating cavity 41; first opening 42; bottom wall 43; top wall 44; first side wall 46; second side wall 45; first sub-side-wall 45A; second sub-side-wall 45B; second accommodating cavity 51; second opening 52; holding plate 60; first accommodating sub-cavity 41A; second accommodating sub-cavity 41B; one-way valve 38; energy-storage module 500; electricity-consumption device 600.

### DETAILED DESCRIPTION

The following will describe technical solutions of embodiments of the disclosure clearly and completely with reference to the accompanying drawings in embodiments of the disclosure. Apparently, embodiments described herein are merely some embodiments, rather than all embodiments, of the disclosure.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is well-known, in order to achieve the big goal for carbon neutrality, the main way of generating green electrical energy is currently to develop green energy such as photovoltaics and wind power to replace fossil energy.

At present, generation of green electrical energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further damage electric power. Therefore, "abandoned wind and abandoned light" may occur due to insufficient power demand or insufficient power-grid admitting ability, and energy storage is required to solve these problems. That is, electrical energy is stored by converting it into other forms of energy by physical or chemical means, and energy is released by converting it into electrical energy when needed. In brief, energy storage is similar to a large "power bank", which stores electrical energy when photovoltaics and wind energy are sufficient and releases stored electric power when needed.

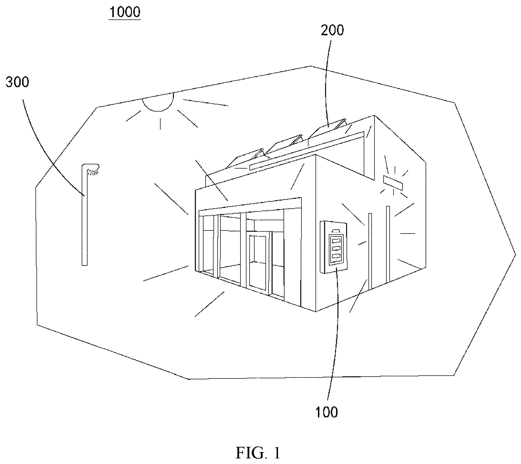

FIG. 1 is an application scenario view of a household energy-storage system 1000 provided in an embodiment of the disclosure.

Taking a household energy-storage scenario for user-side energy storage as an example for illustration, FIG. 1 illustrates a household energy-storage system. As illustrated in FIG. 1, the household energy-storage system includes an energy-storage apparatus 100, an electrical-energy conversion apparatus 200 (for example, a photovoltaic panel), and a customer load 300 (for example, a road lamp, a household appliance, and the like). The energy-storage apparatus 100 is a small energy-storage container, and can be installed on an outdoor wall by means of hanging. In an embodiment, the electrical-energy conversion apparatus 200 can convert solar energy into electrical energy during a period of a valley electricity price and store the electrical energy with the energy-storage apparatus 100. Further, the electrical-energy conversion apparatus 200 can supply the electrical energy to the customer load 300 for use during a period of a peak electricity price, or supply the electrical energy to the customer load 300 for use during power outage/failure of a power grid.

In case where energy is stored by physical or electrochemical means as above described, taking electrochemical energy storage as an example, the energy-storage apparatus 100 includes at least one group of chemical batteries. Chemical elements in the chemical batteries can be used as an energy-storage medium to implement a charging/discharging process through chemical reaction or change of the energy-storage medium. In brief, electrical energy generated by light energy and wind energy is stored in the at least one group of chemical batteries through chemical reaction or change of the energy-storage medium. When the usage of external electrical energy reaches a peak, the power stored in the at least one group of chemical batteries is released for use through chemical reaction or change of the energy-storage medium, or is transferred to a place where the power is scarce for reuse.

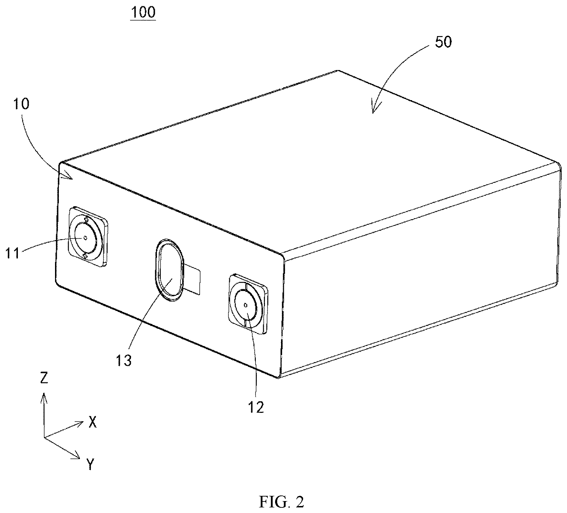

FIG. 2 is a schematic structural view of an energy-storage apparatus 100 provided in an embodiment of the disclosure.

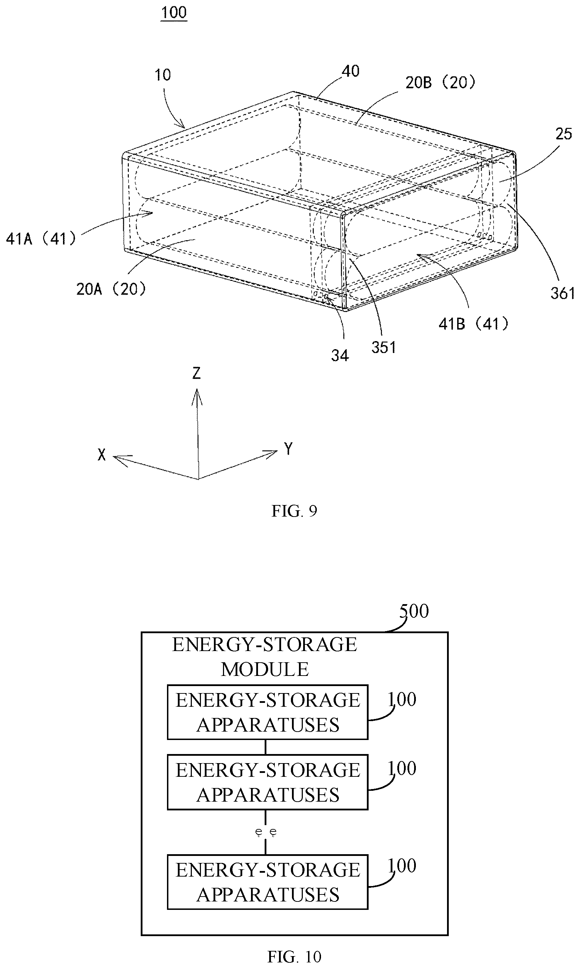

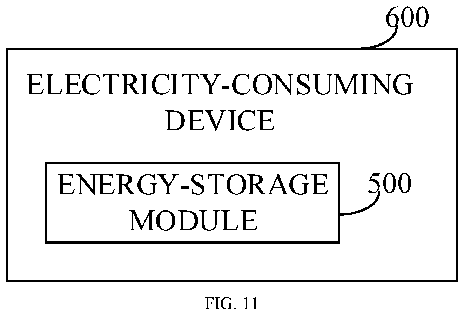

The disclosure provides an energy-storage apparatus 100, an energy-storage module (illustrated in FIG. 10) including multiple energy-storage apparatuses 100, and an electricity-consumption device (illustrated in FIG. 11) with the energy-storage module. In this embodiment, for example, the energy-storage apparatus 100 is a battery. When the energy-storage apparatus 100 is a battery cell, the energy-storage apparatus 100 may be a square battery. The energy-storage module may include, but is not limited to, a battery module, a battery pack, a battery system, or the like. The electricity-consumption device may include, but is not limited to, a large-sized energy-storage container applied in a grid-side energy-storage scenario, a small and medium-sized energy-storage cabinet applied in a user-side industrial and commercial energy-storage scenario (a bank, a mall, and the like), and a small-sized household energy-storage container applied in a user-side household energy-storage scenario.

For ease of illustration, a length direction of the energy-storage apparatus 100 illustrated in FIG. 2 is defined as an X-axis direction, a width direction of the energy-storage apparatus 100 is defined as a Y-axis direction, and a thickness direction of the energy-storage apparatus 100 is defined as a Z-axis direction, where every two of the X-axis direction, the Y-axis direction, and the Z-axis direction are perpendicular to each other. It may be noted that, "same" referred to in the disclosure means that some allowable error may exist. Directional terms such as "on", "under", "in", "out", and the like referred to in description of embodiments of the disclosure are described according to locations illustrated in FIG. 2. A direction towards a positive direction of Z-axis is "on", a direction towards a negative direction of Z-axis is "under", a direction towards the inside of the energy-storage apparatus 100 is "in", and a direction towards the outside of the energy-storage apparatus 100 is "out", which do not constitute limitation to the energy-storage apparatus 100 in a practical application scenario.

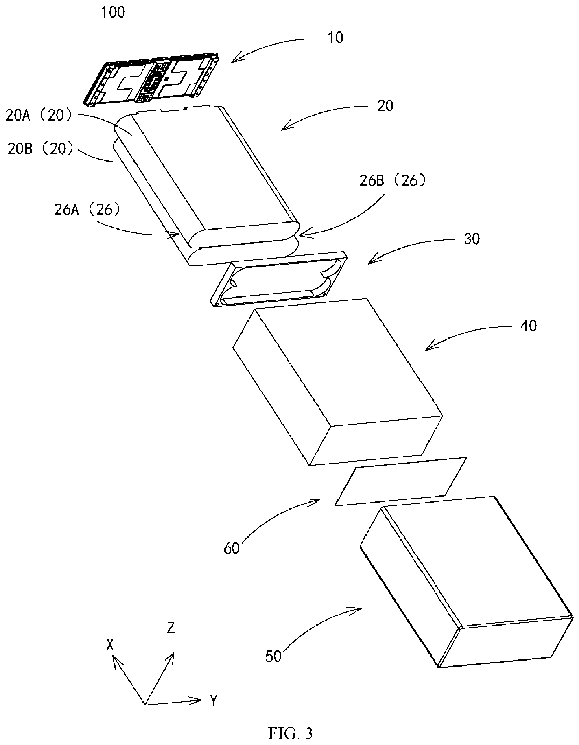

FIG. 3 is an exploded structural view of the energy-storage apparatus 100 illustrated in FIG. 2.

As illustrated in FIG. 3, the energy-storage apparatus 100 includes an end cover assembly 10, an electrode assembly 20, a partition member 30, a protection member 40, and a housing 50. One end of the electrode assembly 20 is connected to the end cover assembly 10. The partition member 30 is fixedly connected in the protection member 40, and the protection member 40 and the partition member 30 are both sleeved on a periphery of the electrode assembly 20. The electrode assembly 20, the partition member 30, and the protection member 40 are all accommodated in the housing 50. The end cover assembly 10 is mounted at one end of the housing 50 and seals the housing 50.

As illustrated in FIG. 2, the end cover assembly 10 includes a positive pole 11, a negative pole 12, and an explosion-proof valve 13. In this embodiment, in a length direction of the end cover assembly 10 (Y-axis direction), the positive pole 11 and the negative pole 12 are located at two opposite ends of the end cover assembly 10 respectively and are spaced apart from each other. Both the positive pole 11 and the negative pole 12 are made of metal materials. The positive pole 11 serves as a positive terminal, when the energy-storage apparatus 100 is externally connected to another device. The negative pole 12 serves as a negative terminal, when the energy-storage apparatus 100 is externally connected to another device. The explosion-proof valve 13 is located between the positive pole 11 and the negative pole 12, and is spaced apart from the positive pole 11 and the negative pole 12. When the pressure inside the energy-storage apparatus 100 is too high, the explosion-proof valve 13 can automatically open to release the pressure, so as to prevent the energy-storage apparatus 100 from explosion.

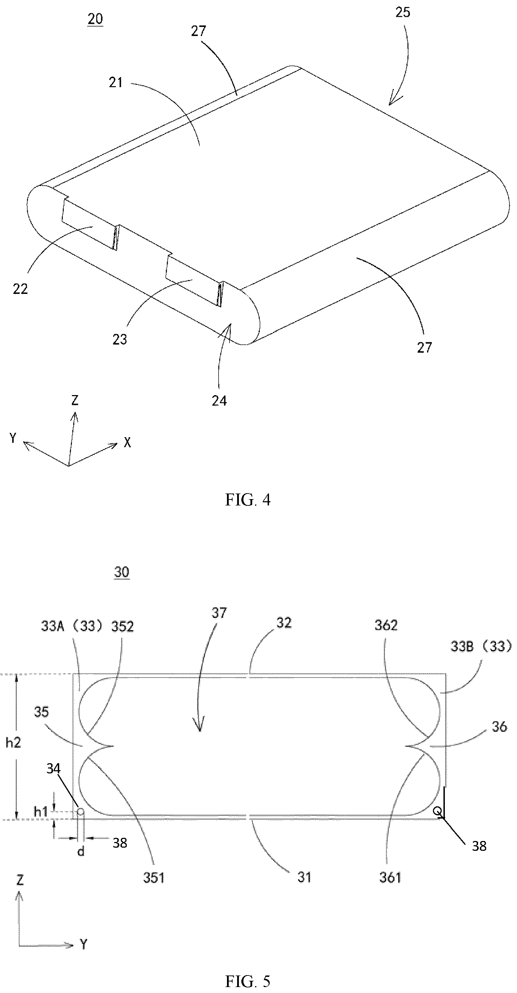

FIG. 4 is a schematic structural view of an electrode assembly 20 illustrated in FIG. 3.

The electrode assembly 20 is substantially in a plate shape and is configured to store or release electrical energy through electrochemical reaction with an electrolyte. As illustrated in FIG. 4, the electrode assembly 20 includes a main body 21, a positive-electrode tab 22, and a negative-electrode tab 23. The electrode assembly 20 is formed by winding a positive electrode and a negative electrode, and a separator is generally disposed between the positive electrode and the negative electrode. Of the positive electrode and the negative electrode, portions having active materials constitute the main body 21 of the electrode assembly 20. The remaining portion of the positive electrode constitutes the positive-electrode tab 22, and the remaining portion of the negative electrode constitutes the negative-electrode tab 23. The main body 21 has a first end 24, a second end 25, and two side portions 27. The first end 24 and the second end 25 are positioned facing away from each other in a length direction of the main body 21 (X-axis direction). The two side portions 27 are connected between the first end 24 and the second end 25, and the two side portions 27 are positioned facing away from each other in a width direction of the main body 21 (Y-axis direction). In this embodiment, the two side portions are both in a semi-cylinder shape, and each of the two side portions protrudes in a direction away from the other side portion. In embodiments of the disclosure, the positive-electrode tab 22 and the negative-electrode tab 23 both are disposed at the first end 24 of the main body 21, and the positive-electrode tab 22 and the negative-electrode tab 23 are positioned facing towards and spaced apart from each other in the width direction of the main body 21 (Y-axis direction). In other embodiments, the positive-electrode tab 22 and the negative-electrode tab 23 can also be disposed at the first end 24 and the second end 25 of the main body 21, respectively. The electrode assembly 20 is connected to the end cover assembly 10. The first end 24 is disposed facing towards the end cover assembly 10, and the second end 25 is disposed facing away from the end cover assembly 10. The positive-electrode tab 22 is welded with the positive pole 11 and can be conductive with the positive pole 11; and the negative-electrode tab 23 is welded with the negative pole 12 and can be conductive with the negative pole 12.

As illustrated in FIG. 3, in this embodiment, the electrode assembly 20 is implemented as two electrode assemblies, and the two electrode assemblies 20 are respectively a first electrode assembly 20A and a second electrode assembly 20B. The first electrode assembly 20A and the second electrode assembly 20B are stacked in a thickness direction of the electrode assembly 20 (Z-axis direction). Two concave portions 26 are defined between the side portions 27 of the first electrode assembly 20A and the side portions 27 of the second electrode assembly 20B, and the two concave portions 26 each extend in a length direction of the electrode assembly 20 (X-axis direction). The two concave portions 26 are respectively a first concave portion 26A and a second concave portion 26B, and the first concave portion 26A and the second concave portion 26B are positioned facing away from each other in a width direction of the electrode assembly 20 (Y-axis direction). An opening of the first concave portion 26A is positioned facing away from the second concave portion 26B, and an opening of the second concave portion 26B is positioned facing away from the first concave portion 26A.

In other embodiments, the electrode assembly 20 may be implemented as one or more than two electrode assemblies, and the specific quantity is not limited. When the electrode assembly 20 is implemented as more than two electrode assemblies, multiple electrode assemblies 20 are stacked in the thickness direction of the electrode assembly 20. The multiple electrode assemblies 20 define multiple first concave portions 26A and multiple second concave portions 26B. The multiple first concave portions 26A are positioned at intervals in the thickness direction of the electrode assembly 20, and the multiple second concave portions 26B are positioned at intervals in the thickness direction of the electrode assembly 20. Each of the multiple first concave portions 26A is positioned facing away from one of the multiple second concave portions 26B in the width direction of the electrode assembly 20.

FIG. 5 is a schematic structural view of a partition member 30 illustrated in FIG. 3.

The partition member 30 is substantially a rectangular frame. The partition member 30 is sleeved on the periphery of the electrode assembly 20, and is in interference fit with the electrode assembly 20. The partition member 30 is made of an elastic insulating material. In this embodiment, the partition member 30 is made of polypropylene (PP).

As illustrated in FIG. 5, the partition member 30 includes a bottom plate 31, a top plate 32, and two side plates 33. The top plate 32 is positioned facing towards the bottom plate 31 in a height direction of the partition member 30 (Z-axis direction). The through-hole 34 is positioned closer to the bottom plate 31 than to the top plate 32. The two side plates 33 are positioned facing towards each other in a length direction of the partition member 30 (Y-axis direction), and are both connected between the top plate 32 and the bottom plate 31 to cooperatively define a through-recess 37. A joint between an inner wall surface of each of the two side plates 33 and an inner wall surface of the top plate 32 is an arc surface, and a joint between the inner wall surface of each of the two side plates 33 and an inner wall surface of the bottom plate 31 is an arc surface. It may be understood that, inner wall surfaces at the four-corner joints of the partition member 30 are all arc surfaces, so as to be tightly attached to an outer peripheral surface of the electrode assembly 20. The two side plates 33 are respectively a first sub-side-plate 33A and a second sub-side-plate 33B.

The partition member 30 defines a through-hole 34. The through-hole 34 is defined in the side plate 33, and penetrates through the side plate 33 in a thickness direction of the partition member 30 (X-axis direction). In this embodiment, the through-hole 34 is a circular hole. In other embodiments, a shape of the through-hole 34 may further be a rectangle, a triangle, a diamond, or the like, and the specific shape is not limited. A ratio of a height h1 of the through-hole 34 to a height h2 of the partition member 30 ranges from 0.05 to 0.1, and a ratio of a diameter d of the through-hole 34 to the height h2 of the partition member 30 ranges from 0.03 to 0.05. The height h1 of the through-hole 34 refers to a distance between a geometric center (i.e., a center of a circle in this embodiment) of the through-hole 34 and an outer wall surface of the bottom plate 31. The diameter d of the through-hole 34 refers to the diameter of the through-hole 34 when the through-hole 34 is a circular hole. The height h2 of the partition member 30 refers to a distance between an outer wall surface of the top plate 32 and the outer wall surface of the bottom plate 31. In this embodiment, the through-hole 34 is implemented as two through-holes. Two through-holes 34 is positioned on the two side plates 33, respectively. The two through-holes 34 are positioned facing towards each other in the length direction of the partition member 30, so that the electrolyte can flow more evenly. In other embodiments, the through-hole 34 includes two sets of through sub-holes. The two sets of through sub-holes are positioned on the two side plates 33, respectively, and the two sets of through sub-holes are positioned facing towards each other in the length direction of the partition member 30.

In an embodiment, the partition member 30 is further provided with a one-way valve 38. The one-way valve 38 may be disposed on a hole wall of the through-hole 34, and may also be disposed on a surface of the partition member 30 in the thickness direction. In the thickness direction of the partition member 30, an orthographic projection of the one-way valve 38 completely covers an orthographic projection of the through-hole 34. The one-way valve 38 is configured to make fluid flow in a single direction.

The partition member 30 is further provided with a first protrusion 35 and a second protrusion 36. The first protrusion 35 and the second protrusion 36 are both positioned facing towards the through-recess 37. In the length direction of the partition member 30, the first protrusion 35 and the second protrusion 36 are positioned facing towards each other. The first protrusion 35 is positioned protruding from an inner wall surface of the first sub-side-plate 33A. The first protrusion 35 has a first contact surface 351 and a second contact surface 352 positioned facing away from the first contact surface 351, where both the first contact surface 351 and the second contact surface 352 are arc-shaped surfaces. One end of the first contact surface 351 is connected to the first sub-side-plate 33A, the other end of the first contact surface 351 is connected to one end of the second contact surface 352, and the other end of the second contact surface 352 is connected to the first sub-side-plate 33A. The first protrusion 35 is inserted into the first concave portion 26A. The first contact surface 351 and the second contact surface 352 are, respectively, attached to part of outer surfaces of two adjacent electrode assemblies 20 between which the first concave portion 26A is defined. The second protrusion 36 is positioned protruding from an inner wall surface of the second sub-side-plate 33B. The second protrusion 36 has a third contact surface 361 and a fourth contact surface 362 positioned facing away from the third contact surface 361, where both the third contact surface 361 and the fourth contact surface 362 are arc-shaped surfaces. One end of the third contact surface 361 is connected to the second sub-side-plate 33B, the other end of the third contact surface 361 is connected to one end of the fourth contact surface 362, and the other end of the fourth contact surface 362 is connected to the second sub-side-plate 33B. The second protrusion 36 is inserted into the second concave portion 26B. The third contact surface 361 and the fourth contact surface 362 are, respectively, attached to part of outer surfaces of two adjacent electrode assemblies 20 between which the second concave portion 26B is defined.

In this embodiment, one first protrusion 35 and one second protrusion 36 are provided, and the first protrusion 35 and the second protrusion 36 each are integrally formed with the partition member 30, so as to simplify a process and reduce processing cost. In other embodiments, multiple first protrusions 35 and multiple second protrusions 36 may be provided, and the quantity of the first protrusions 35 may be the same as the quantity of the second protrusions 36. In the length direction of the partition member 30, the multiple first protrusions 35 face towards the multiple second protrusions 36 in a one-to-one correspondence. In the width direction of the partition member 30, the multiple first protrusions 35 are disposed at intervals and the multiple second protrusions 36 are disposed at intervals. Each first protrusion 35 is inserted into one first concave portion 26A, and each second protrusions 36 is inserted into one second concave portions 26B, so as to tightly abut against outer surfaces of the electrode assemblies 20, thereby achieving an interference fit between the partition member 30 and the electrode assembly 20.

In an embodiment, the first protrusion 35 and the second protrusion 36 each have a tip, that is, a joint between the first contact surface 351 and the second contact surface 352 is a sharp angle. The tip is inserted into the concave portion 26 and is configured to seal a gap between the electrode assemblies 20, when the partition member 30 is sleeved on the periphery of the electrode assembly 20, thereby achieving better sealing between the partition member 30 and the electrode assembly 20.

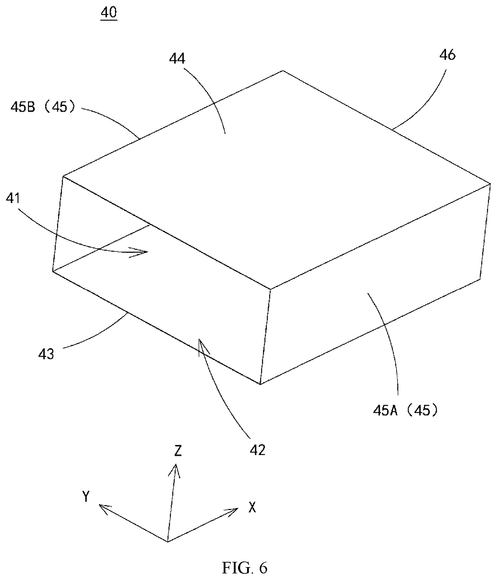

FIG. 6 is a schematic structural view of a protection member 40 illustrated in FIG. 3.

The protection member 40 is substantially a rectangular hollow body and is made of an insulating material. The protection member 40 is sleeved on the outer surface of the electrode assembly 20, and is connected to the end cover assembly 10. The protection member 40 is configured to protect the electrode assembly 20 from being scratched by the housing 50 when the electrode assembly 20 is placed in the housing 50, and at the same time, is configured to insulate the electrode assembly 20 from the housing 50. In this embodiment, the protection member 40 is mylar, i.e., a polyester film. The protection member 40 can be adhered through a hot-melt process to the end cover assembly 10 at one side of the end cover assembly 10 facing the electrode assembly 20.

The protection member 40 defines a first accommodating cavity 41 and a first opening 42. In a length direction of the protection member 40 (X-axis direction), the first opening 42 is in communication with the first accommodating cavity 41. The first accommodating cavity 41 is configured to accommodate the electrode assembly 20 and the partition member 30. When the protection member 40 is sleeved on the electrode assembly 20, the electrode assembly 20 enters the first accommodating cavity 41 through the first opening 42.

As illustrated in FIG. 6, the protection member 40 has a bottom wall 43, a top wall 44, a first side wall 46, and two second side walls 45. The top wall 44 and the bottom wall 43 are positioned facing towards each other in a height direction of the protection member 40 (Z-axis direction). The two second side walls 45 are positioned facing towards each other in a width direction of the protection member 40 (Y-axis direction), and are both connected between the top wall 44 and the bottom wall 43. The first side wall 46 is positioned at one end of the protection member 40 in a length direction of the protection member 40 (X-axis direction), is connected between the top wall 44 and the bottom wall 43, and is connected between the two second side walls 45. The bottom wall 43, the top wall 44, the two second side walls 45, and the first side wall 46 are connected together to cooperatively define the first accommodating cavity 41. The first opening 42 is positioned at one end of the protection member 40 in the length direction of the protection member 40, and is positioned facing away from the first side wall 46. The two second side walls 45 are a first sub-side-wall 45A and a second sub-side-wall 45B.

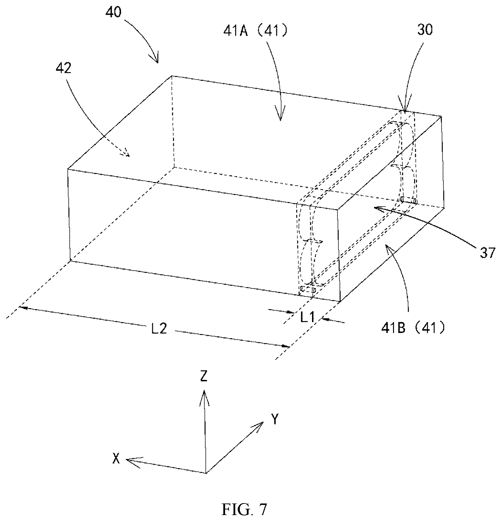

FIG. 7 is a schematic structural view illustrating fixed connection between a partition member 30 and a protection member 40.

As illustrated in FIG. 5 to FIG. 7, the partition member 30 is fixedly connected in the first accommodating cavity 41 of the protection member 40. The bottom plate 31 is connected to and fixed to the bottom wall 43, the top plate 32 is connected to and fixed to the top wall 44, the first sub-side-plate 33A is connected to and fixed to the first sub-side-wall 45A, and the second sub-side-plate 33B is connected to and fixed to the second sub-side-wall 45B. The partition member 30 separates the first accommodating cavity 41 into a first accommodating sub-cavity 41A and a second accommodating sub-cavity 41B. In the length direction of the protection member 40, the first opening 42, the first accommodating sub-cavity 41A, and the second accommodating sub-cavity 41B are in communication, and the through-recess 37 is in communication with the first accommodating sub-cavity 41A and the second accommodating sub-cavity 41B. A ratio of a distance L1 between the partition member 30 and the first side wall 46 to a length L2 of the protection member 40 ranges from 0.1 to 0.15. L1 refers to a distance between a surface of the partition member 30 facing the first side wall 46 and an outer wall surface of the first side wall 46. L2 refers to a dimension of the second side wall 45 in the length direction (X-axis direction). It may be understood that, the volume of the first accommodating sub-cavity 41A is much greater than the volume of the second accommodating sub-cavity 41B. The partition member 30 may be adhered to the protection member 40, may also be fixedly connected to the protection member 40 through a hot-melt process, and may also be integrally formed with the protection member 40.

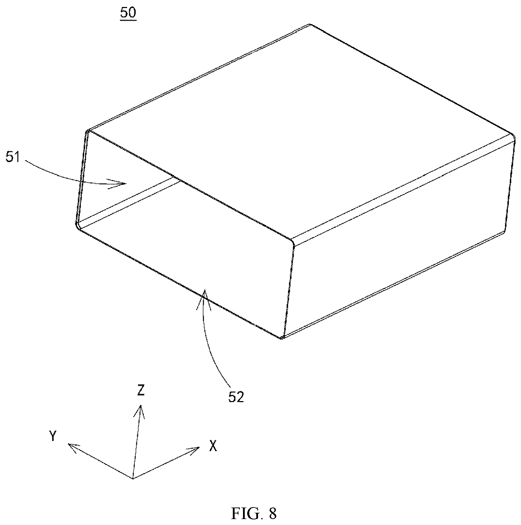

FIG. 8 is a schematic structural view of a housing 50 illustrated in FIG. 3.

As illustrated in FIG. 8, the housing 50 is substantially rectangular and is made of a metal material. The housing 50 defines a second accommodating cavity 51 and a second opening 52. The second opening 52 is in communication with the second accommodating cavity 51 in a length direction of the housing 50. The electrode assembly 20 and the protection member 40 are accommodated in the second accommodating cavity 51 through the second opening 52. The end cover assembly 10 is mounted in the second opening 52 and seals the housing 50.

As illustrated in FIG. 3, in this embodiment, the energy-storage apparatus 100 further includes a holding plate 60. The holding plate 60 is configured to support the electrode assembly 20. The holding plate 60 is substantially in a rectangular sheet shape and is made of an insulating material. The holding plate 60 is accommodated in the second accommodating cavity 51 of the housing 50, is disposed between the first side wall 46 of the protection member 40 and the housing 50, and is fixedly connected to the first side wall 46. In some embodiments, the holding plate 60 may be integrally formed with the protection member 40.

FIG. 9 is a perspective structural view illustrating part of the energy-storage apparatus 100 illustrated in FIG. 2.

After the energy-storage apparatus 100 is assembled, an electrolyte is injected into the protection member 40 through an electrolyte injection hole on the end cover assembly 10. The electrolyte is stored in the first accommodating cavity 41 and infiltrates the electrode assembly 20. In this embodiment, the energy-storage apparatus 100 in an operating state is in a lying state, the first electrode assembly 20A and the second electrode assembly 20B are stacked in a direction perpendicular to the ground, and the second electrode assembly 20B is disposed away from the ground.

In the operating state, as the electrolyte in the energy-storage apparatus 100 reacts with the electrode assembly 20 and is continuously consumed, a liquid level of the electrolyte also decreases continuously. In addition, when the electrolyte in the energy-storage apparatus 100 reacts with the electrode assembly 20, gas can be generated. Since the partition member 30 separates the first accommodating cavity 41 into the first accommodating sub-cavity 41A and the second accommodating sub-cavity 41B, and the volume of the first accommodating sub-cavity 41A is much greater than the volume of the second accommodating sub-cavity 41B, most of the electrode assembly 20 is located inside the first accommodating sub-cavity 41A, and a large amount of gas generated through reaction of the electrode assembly 20 with the electrolyte is also concentrated in the first accommodating sub-cavity 41A. A large amount of gas trapped in the first accommodating sub-cavity 41A will press the electrolyte, so as to facilitate the electrolyte to flow through the through-hole 34 on the partition member 30 from the first accommodating sub-cavity 41A to the second accommodating sub-cavity 41B, thereby raising the liquid level in the second accommodating sub-cavity 41B. As the energy-storage apparatus 100 continues to operate and the electrolyte continues to be consumed to generate gas, a difference between the gas pressure in the first accommodating sub-cavity 41A and the gas pressure in the second accommodating sub-cavity 41B may increase gradually, and a difference between the liquid-level height of the electrolyte in the second accommodating sub-cavity 41B and the liquid-level height of the electrolyte in the first accommodating sub-cavity 41A may also increase gradually. Therefore, when the liquid level of the electrolyte in the first accommodating sub-cavity 41A is lower than the surface of the second electrode assembly 20B facing the ground, the liquid level of the electrolyte in the second accommodating sub-cavity 41B still continues to be higher than the surface of the second electrode assembly 20B facing the ground. Therefore, the electrolyte in the second accommodating sub-cavity 41B can continue to be in contact with the second end 25 of the second electrode assembly 20B, and is attracted by the separator of the second electrode assembly 20B through capillary action and transported to the entire second electrode assembly 20B. In this way, the electrolyte can circulate and simultaneously infiltrate multiple electrode assemblies 20.

In this embodiment, since the first protrusion 35 and the second protrusion 36 of the partition member 30 each have a tip. After the electrode assembly 20 passes through the through-recess 37, the tip is inserted into the concave portion 26 and is configured to fill the gap between the electrode assemblies, thereby ensuring better sealing between the partition member 30 and the electrode assemblies 20. In this way, the gas generated in the first accommodating sub-cavity 41A can be prevented from flowing through the gap between the partition member 30 and the electrode assemblies 20 into the second accommodating sub-cavity 41B. Therefore, a difference between the gas pressure in the first accommodating sub-cavity 41A and the gas pressure in the second accommodating sub-cavity 41B cannot be reduced, and circulation and infiltration of the electrolyte into the multiple electrode assemblies 20 cannot be affected.

In an embodiment, one electrode assembly 20 is provided. When the energy-storage apparatus 100 is in a lying state, the electrode assembly 20 is disposed perpendicular to the ground. When the electrolyte in the energy-storage apparatus 100 reacts with the electrode assembly 20 and is continuously consumed, and a liquid level of the electrolyte decreases continuously, a part of the electrode assembly 20 away from the ground is unable to be infiltrated with the electrolyte, which affects service life of the energy-storage apparatus 100. The partition member 30 is disposed to separate the first accommodating cavity 41 into the first accommodating sub-cavity 41A and the second accommodating sub-cavity 41B. In this way, a difference between the gas pressure in the first accommodating sub-cavity 41A and the gas pressure in the second accommodating sub-cavity 41B can be utilized to maintain a relatively high liquid level in the second accommodating sub-cavity 41B, thereby continuously infiltrating and replenishing the part of the electrode assembly 20 away from the ground.

In an embodiment, the partition member 30 is further provided with a one-way valve 38, and in the thickness direction of the partition member 30, an orthographic projection of the one-way valve 38 completely covers an orthographic projection of the through-hole 34. The one-way valve 38 is configured so that the electrolyte can only flow from the first accommodating sub-cavity 41A to the second accommodating sub-cavity 41B and cannot flow in an opposite direction, which is conducive to maintaining the difference between the liquid-level of the first accommodating sub-cavity 41A and the liquid-level of the second accommodating sub-cavity 41B. Therefore, the electrolyte can circulate and simultaneously infiltrate the multiple electrode assemblies 20.

As above mentioned, in embodiments of the disclosure, the partition member 30 is disposed to separate the first accommodating cavity 41 into the first accommodating sub-cavity 41A and the second accommodating sub-cavity 41B that have different sizes. The difference between the gas pressure in the first accommodating sub-cavity 41A and the gas pressure in the second accommodating sub-cavity 41B results in the difference between the liquid-level height of the electrolyte in the first accommodating sub-cavity 41A and the liquid-level height of the electrolyte in the second accommodating sub-cavity 41B. In this way, a relatively high liquid level can be maintained in the smaller second accommodating sub-cavity 41B, so as to realize continuous infiltration and replenishment for the second electrode assembly 20B. Therefore, even if the liquid level of the electrolyte decreases, infiltration of the electrolyte into the electrode assembly 20 away from the ground remains unaffected, which significantly improves service life of the energy-storage apparatus 100.

As illustrated in FIG. 5, in embodiments of the disclosure, the ratio of the height h1 of the through-hole 34 to the height h2 of the partition member 30 may be less than or equal to 0.1, so that the through-hole 34 may be not too high. This is because when the liquid level of the electrolyte decreases to the height of the through-hole 34, the gas will also flow through the through-hole 34. In this case, differences between the gas pressure in the first accommodating sub-cavity 41A and the gas pressure in the second accommodating sub-cavity 41B and between the liquid-level height of the electrolyte in the first accommodating sub-cavity 41A and the liquid-level height of the electrolyte in the second accommodating sub-cavity 41B cannot be maintained. Therefore, the second electrode assembly 20B cannot be continuously infiltrated. The ratio of the height h1 of the through-hole 34 to the height h2 of the partition member 30 may be greater than or equal to 0.05, so that the through-hole 34 may be not too low and close to an edge of the partition member 30, thereby avoiding insufficient structural strength of the partition member 30 at the through-hole 34.

In embodiments of the disclosure, the ratio of the diameter d of the through-hole 34 to the height h2 of the partition member 30 may be greater than or equal to 0.03, so that the through-hole 34 may be not too small to make the electrolyte flow between the first accommodating sub-cavity 41A and the second accommodating sub-cavity 41B. The ratio of the diameter d of the through-hole 34 to the height h2 of the partition member 30 may be less than or equal to 0.05, so that the through-hole 34 may be not too large and the structural strength of the partition member 30 at the through-hole 34 may be sufficient.

As illustrated in FIG. 7, in embodiments of the disclosure, the ratio of the distance L1 between the partition member 30 and the first side wall 46 to the length L2 of the protection member 40 may be greater than or equal to 0.1, so that the second accommodating sub-cavity 41B may be not too small in volume to store sufficient electrolyte to infiltrate the second electrode assembly 20B. The ratio of the distance L1 between the partition member 30 and the first side wall 46 to the length L2 of the protection member 40 may be less than or equal to 0.15, so that the second accommodating sub-cavity 41B may be not too large in volume and the first accommodating sub-cavity 41A may be not too small in volume, thereby forming sufficient differences between the gas pressure in the first accommodating sub-cavity 41A and the gas pressure in the second accommodating sub-cavity 41B and between the liquid-level height of the electrolyte in the first accommodating sub-cavity 41A and the liquid-level height of the electrolyte in the second accommodating sub-cavity 41B.

Embodiments of the disclosure are described in detail in the above. Principles and implementation manners of the disclosure are elaborated with specific embodiments herein. The illustration of embodiments above is only used to help understanding of methods and core ideas of the disclosure. The invention is set out in the appended claims.

## Claims

1. An energy-storage apparatus (100), comprising an end cover assembly (10), an electrode assembly (20), a partition member (30), a protection member (40), and a housing (50), wherein:
the partition member (30) defines a through-recess (37) and a through-hole (34), both the through-recess (37) and the through-hole (34) penetrate through the partition member (30) in a thickness direction of the partition member (30), and the through-recess (37) and the through-hole (34) are spaced apart from each other;
the protection member (40) defines a first accommodating cavity (41), the first accommodating cavity (41) defines a first opening (42), both the partition member (30) and the electrode assembly (20) are accommodated in the first accommodating cavity (41), the electrode assembly (20) passes through the through-recess (37), and the electrode assembly (20) is in sealing connection to a recess wall of the through-recess (37); the partition member (30) is in sealing connection to a cavity wall of the first accommodating cavity (41) and separates the first accommodating cavity (41) into a first accommodating sub-cavity (41A) and a second accommodating sub-cavity (41B), the first accommodating sub-cavity (41A) is in communication with the first opening (42), and the first accommodating sub-cavity (41A) is in communication with the second accommodating sub-cavity (41B) through the through-hole (34);
the housing (50) defines a second opening (52), the protection member (40) is accommodated in the housing (50) through the second opening (52), the end cover assembly (10) is mounted in the second opening (52) and seals the second opening (52), the end cover assembly (10) is opposite to the first opening (42) and the end cover assembly (10) is connected to the protection member (40), and an electrolyte of the energy-storage apparatus (100) is accommodated in the housing (50) and the first accommodating cavity (41);
the through-hole is configured to make the electrolyte in the first accommodating sub-cavity (41A) flow to the second accommodating sub-cavity (41B) when a difference between a gas pressure in the first accommodating sub-cavity (41A) and a gas pressure in the second accommodating sub-cavity (41B) is generated during operation of the energy-storage apparatus (100);
the partition member (30) comprises a bottom plate (31), a top plate (32), and two side plates (33), the top plate (32) is positioned facing towards the bottom plate (31) in a height direction (Z-axis direction) of the partition member (30), the two side plates (33) are positioned facing towards each other in a length direction (Y-axis direction) of the partition member (30), and the through-hole (34) is positioned closer to the bottom plate (31) than to the top plate (32);
a distance between a geometric center of the through-hole (34) and an outer wall surface of the bottom plate (31) is h1, and a distance between an outer wall surface of the top plate (32) and the outer wall surface of the bottom plate (31) is h2, wherein a ratio of h1 to h2 ranges from 0.05 to 0.1; and
the protection member (40) has a first side wall (46), the first side wall (46) is disposed at one end of the protection member (40) away from the end cover assembly (10), and a ratio of a distance between the partition member (30) and the first side wall (46) to a dimension of the protection member (40) in a length direction of the partition member (30) ranges from 0.1 to 0.15.

2. The energy-storage apparatus (100) of claim 1, wherein the through-hole (34) is a circular hole, and a ratio of a diameter of the through-hole (34) to a distance between an outer wall surface of the top plate (32) and the outer wall surface of the bottom plate (31) ranges from 0.03 to 0.05.

3. The energy-storage apparatus (100) of claim 1, wherein the through-hole (34) comprises two sets of through sub-holes, each of the two sets of through sub-holes penetrates through one of the two side plates (33), and the two sets of through sub-holes are positioned facing towards each other in the length direction of the partition member (30).

4. The energy-storage apparatus (100) of claim 1 or 2, wherein the partition member (30) is provided with a first protrusion (35) and a second protrusion (36), the first protrusion (35) and the second protrusion (36) are positioned protruding from the two side plates (33) respectively and towards the through-recess (37), and in the length direction of the partition member (30), the first protrusion (35) and the second protrusion (36) are positioned facing towards each other;
the electrode assembly (20) is implemented as two electrode assemblies, the two electrode assemblies (20) are stacked in a thickness direction of the electrode assembly (20), a first concave portion (26A) and a second concave portion (26B) are defined between the two electrode assemblies (20), and the first concave portion (26A) and the second concave portion (26B) are positioned facing away from each other in a width direction of the electrode assembly (20);
the first protrusion (35) is inserted into the first concave portion (26A) and is configured to seal a gap between the two electrode assemblies (20), and surfaces of the first protrusion (35) abuts against part of outer surfaces of the two electrode assemblies (20) between which the first concave portion (26A) is defined; and
the second protrusion (36) is inserted into the second concave portion (26B) and is configured to seal the gap between the two electrode assemblies (20), and surfaces of the second protrusion (36) abuts against part of outer surfaces of the two electrode assemblies (20) between which the second concave portion (26B) is defined.

5. The energy-storage apparatus (100) of claim 4, wherein the first protrusion (35) and the second protrusion (36) are integrally formed with the two side plates (33) respectively.

6. The energy-storage apparatus (100) of claim 1 or 2, wherein the partition member (30) and the protection member (40) are integrally formed.

7. The energy-storage apparatus (100) of claim 1, wherein the partition member (30) is further provided with a one-way valve, and in the thickness direction of the partition member (30), an orthographic projection of the one-way valve completely covers an orthographic projection of the through-hole (34); the one-way valve is configured to only allow fluid to flow from the first accommodating sub-cavity (41A) to the second accommodating sub-cavity (41B).

8. An energy-storage module, comprising a plurality of energy-storage apparatuses (100) of any one of claims 1 to 7, the plurality of energy-storage apparatuses (100) being electrically connected.

9. An electricity-consumption device, comprising the energy-storage module of claim 8, the energy-storage module being configured to supply power to the power-consuming device.

## Patentansprüche

1. Energiespeichereinrichtung (100), die eine Endabdeckungsanordnung (10), eine Elektrodenanordnung (20), ein Trennelement (30), ein Schutzelement (40) und ein Gehäuse (50) umfasst, wobei:
das Trennelement (30) eine Durchgangsausnehmung (37) und ein Durchgangsloch (34) definiert, wobei beide, die Durchgangsausnehmung (37) und das Durchgangsloch (34) durch das Trennelement (30) hindurch in einer Dickenrichtung des Trennelements (30) durchdringen und die Durchgangsausnehmung (37) und das Durchgangsloch (34) voneinander beabstandet sind;
das Schutzelement (40) einen ersten Unterbringungshohlraum (41) definiert, der erste Unterbringungshohlraum (41) eine erste Öffnung (42) definiert, beide, das Trennelement (30) und die Elektrodenanordnung (20) in dem ersten Unterbringungshohlraum (41) untergebracht sind, die Elektrodenanordnung (20) durch die Durchgangsausnehmung (37) verläuft und die Elektrodenanordnung (20) in dichtender Verbindung mit einer Ausnehmungswand der Durchgangsausnehmung (37) steht; das Trennelement (30) in dichtender Verbindung mit einer Hohlraumwand des ersten Unterbringungshohlraums (41) steht und den ersten Unterbringungshohlraum (41) in einen ersten Unterbringungsteilhohlraum (41A) und einen zweiten Unterbringungsteilhohlraum (41B) trennt, der erste Unterbringungsteilhohlraum (41A) in Verbindung mit der ersten Öffnung (42) steht und der erste Unterbringungsteilhohlraum (41A) durch das Durchgangsloch (34) hindurch in Verbindung mit dem zweiten Unterbringungsteilhohlraum (41B) steht;
das Gehäuse (50) eine zweite Öffnung (52) definiert, das Schutzelement (40) durch die zweite Öffnung (52) hindurch im Gehäuse (50) untergebracht ist, die Endabdeckungsanordnung (10) in der zweiten Öffnung (52) montiert ist und die zweite Öffnung (52) abdichtet, die Endabdeckungsanordnung (10) der ersten Öffnung (42) gegenüberliegt und die Endabdeckungsanordnung (10) mit dem Schutzelement (40) verbunden ist, und ein Elektrolyt der Energiespeichereinrichtung (100) in dem Gehäuse (50) und dem ersten Unterbringungshohlraum (41) untergebracht ist;
das Durchgangsloch konfiguriert ist, um den Elektrolyten im ersten Unterbringungsteilhohlraum (41A) in den zweiten Unterbringungsteilhohlraum (41B) fließen zu lassen, wenn während des Betriebs der Energiespeichereinrichtung (100) eine Differenz zwischen einem Gasdruck in dem ersten Unterbringungsteilhohlraum (41A) und einem Gasdruck im zweiten Unterbringungsteilhohlraum (41B) erzeugt wird;
das Trennelement (30) eine Bodenplatte (31), eine Oberplatte (32) und zwei Seitenplatten (33) umfasst, wobei die Oberplatte (32) in einer Höhenrichtung (Z-Achsenrichtung) des Trennelements (30) zur Bodenplatte (31) zeigend positioniert ist, wobei die beiden Seitenplatten (33) zueinander zeigend
in einer Längsrichtung (Y-Achsenrichtung) des Trennelements (30) positioniert sind, und das Durchgangsloch (34) näher an der Bodenplatte (31) als an der Oberplatte (32) positioniert ist;
ein Abstand zwischen einem geometrischen Mittelpunkt des Durchgangslochs (34) und einer Außenwandfläche der Bodenplatte (31) h1 ist und ein Abstand zwischen einer Außenwandfläche der Oberplatte (32) und der Außenwandfläche der Bodenplatte (31) h2 ist, wobei ein Verhältnis von h1 zu h2 zwischen 0,05 und 0,1 liegt; und
das Schutzelement (40) eine erste Seitenwand (46) aufweist, die erste Seitenwand (46) an einem Ende des Schutzelements (40) von der Endabdeckungsanordnung (10) entfernt angeordnet ist, und ein Verhältnis eines Abstands zwischen dem Trennelement (30) und der ersten Seitenwand (46) zu einem Maß des Schutzelements (40) in einer Längenrichtung des Trennelements (30) in einem Bereich von 0,1 bis 0,15 liegt.

2. Energiespeichereinrichtung (100) nach Anspruch 1, wobei das Durchgangsloch (34) ein kreisförmiges Loch ist, und ein Verhältnis eines Durchmessers des Durchgangslochs (34) zu einem Abstand zwischen einer Außenwandfläche der Oberplatte (32) und der Außenwandfläche der Bodenplatte (31) in einem Bereich von 0,03 bis 0,05 liegt.

3. Energiespeichereinrichtung (100) nach Anspruch 1, wobei das Durchgangsloch (34) zwei Sätze von Durchgangsteillöchern umfasst, jeder der beiden Sätze von Durchgangsteillöchern durch eine der beiden Seitenplatten (33) durchdringt, und die beiden Sätze von Durchgangsteillöchern in Längsrichtung des Trennelements (30) zueinander zeigend positioniert sind.

4. Energiespeichereinrichtung (100) nach Anspruch 1 oder 2, wobei das Trennelement (30) mit einem ersten Vorsprung (35) und einem zweiten Vorsprung (36) bereitgestellt ist, wobei der erste Vorsprung (35) und der zweite Vorsprung (36) jeweils von den beiden Seitenplatten (33) und in Richtung der Durchgangsausnehmung (37) vorstehend positioniert sind, und in Längsrichtung des Trennelements (30) der erste Vorsprung (35) und der zweite Vorsprung (36) zueinander zeigend positioniert sind;
die Elektrodenanordnung (20) als zwei Elektrodenanordnungen implementiert ist, die beiden Elektrodenanordnungen (20) in einer Dickenrichtung der Elektrodenanordnung (20) gestapelt sind, ein erster konkaver Abschnitt (26A) und ein zweiter konkaver Abschnitt (26B) zwischen den beiden Elektrodenanordnungen (20) definiert sind und der erste konkave Abschnitt (26A) und der zweite konkave Abschnitt (26B) in einer Breitenrichtung der Elektrodenanordnung (20) voneinander weg zeigend positioniert sind;
der erste Vorsprung (35) in den ersten konkaven Abschnitt (26A) eingeführt ist und konfiguriert ist, um einen Spalt zwischen den beiden Elektrodenanordnungen (20) abzudichten, und Oberflächen des ersten Vorsprungs (35) an einem Teil von Außenflächen der beiden Elektrodenanordnungen (20) anliegen, zwischen denen der erste konkave Abschnitt (26A) definiert ist; und
der zweite Vorsprung (36) in den zweiten konkaven Abschnitt (26B) eingeführt ist und konfiguriert ist, um den Spalt zwischen den beiden Elektrodenanordnungen (20) abzudichten, und Oberflächen des zweiten Vorsprungs (36) an einem Teil von Außenflächen der beiden Elektrodenanordnungen (20) anliegen, zwischen denen der zweite konkave Abschnitt (26B) definiert ist.

5. Energiespeichereinrichtung (100) nach Anspruch 4, wobei der erste Vorsprung (35) und der zweite Vorsprung (36) jeweils in einem Stück mit den beiden Seitenplatten (33) gebildet sind.

6. Energiespeichereinrichtung (100) nach Anspruch 1 oder 2, wobei das Trennelement (30) und das Schutzelement (40) in einem Stück gebildet sind.

7. Energiespeichereinrichtung (100) nach Anspruch 1, wobei das Trennelement (30) weiter mit einem Einwegventil bereitgestellt ist und in der Dickenrichtung des Trennelements (30) eine orthogonale Projektion des Einwegventils eine orthogonale Projektion des Durchgangslochs (34) vollständig abdeckt; das Einwegventil konfiguriert ist, um es einem Fluid nur zu erlauben, vom ersten Unterbringungsteilhohlraum (41A) zum zweiten Unterbringungsteilhohlraum (41B) zu fließen.

8. Energiespeichermodul, das eine Vielzahl von Energiespeichereinrichtungen (100) nach einem der Ansprüche 1 bis 7 umfasst, wobei die Vielzahl von Energiespeichereinrichtungen (100) elektrisch verbunden sind.

9. Stromverbrauchsvorrichtung, die das Energiespeichermodul nach Anspruch 8 umfasst, wobei das Energiespeichermodul konfiguriert ist, um der Stromverbrauchsvorrichtung Strom zuzuführen.

## Revendications

1. Appareil de stockage d'énergie (100), comportant un ensemble couvercle d'extrémité (10), un ensemble électrode (20), un élément de cloisonnement (30), un élément de protection (40) et un boîtier (50), dans lequel :
l'élément de cloisonnement (30) définit un évidement traversant (37) et un trou traversant (34), l'évidement traversant (37) et le trou traversant (34) pénètrent à travers l'élément de cloisonnement (30) dans une direction d'épaisseur de l'élément de cloisonnement (30), et l'évidement traversant (37) et le trou traversant (34) sont espacés l'un de l'autre ;
l'élément de protection (40) définit une première cavité de réception (41), la première cavité de réception (41) définit une première ouverture (42), l'élément de cloisonnement (30) et l'ensemble électrode (20) sont tous deux reçus dans la première cavité de réception (41), l'ensemble électrode (20) passe à travers l'évidement traversant (37), et l'ensemble électrode (20) est en liaison d'étanchéité avec une paroi d'évidement de l'évidement traversant (37) ; l'élément de cloisonnement (30) est en liaison d'étanchéité avec une paroi de cavité de la première cavité de réception (41) et sépare la première cavité de réception (41) en une première sous-cavité de réception (41A) et une seconde sous-cavité de réception (41B), la première sous-cavité de réception (41A) est en communication avec la première ouverture (42), et la première sous-cavité de réception (41A) est en communication avec la seconde sous-cavité de réception (41B) à travers le trou traversant (34) ;
le boîtier (50) définit une seconde ouverture (52), l'élément de protection (40) est reçu dans le boîtier (50) à travers la seconde ouverture (52), l'ensemble couvercle d'extrémité (10) est monté dans la seconde ouverture (52) et assure l'étanchéité de la seconde ouverture (52), l'ensemble couvercle d'extrémité (10) est en face de la première ouverture (42) et l'ensemble couvercle d'extrémité (10) est relié à l'élément de protection (40), et un électrolyte de l'appareil de stockage d'énergie (100) est reçu dans le boîtier (50) et la première cavité de réception (41) ;
le trou traversant est configuré pour amener l'électrolyte dans la première sous-cavité de réception (41A) à s'écouler vers la seconde sous-cavité de réception (41B) lorsqu'une différence entre une pression de gaz dans la première sous-cavité de réception (41A) et une pression de gaz dans la seconde sous-cavité de réception (41B) est générée pendant le fonctionnement de l'appareil de stockage d'énergie (100) ;
l'élément de cloisonnement (30) comporte une plaque inférieure (31), une plaque supérieure (32) et deux plaques latérales (33), la plaque supérieure (32) est positionnée dirigée vers la plaque inférieure (31) dans une direction de hauteur (direction de l'axe Z) de l'élément de cloisonnement (30), les deux plaques latérales (33) sont positionnées dirigées l'une vers
l'autre dans une direction de longueur (direction de l'axe Y) de l'élément de cloisonnement (30), et le trou traversant (34) est positionné plus près de la plaque inférieure (31) que de la plaque supérieure (32) ;
une distance entre un centre géométrique du trou traversant (34) et une surface de paroi externe de la plaque inférieure (31) est h1, et une distance entre une surface de paroi externe de la plaque supérieure (32) et la surface de paroi externe de la plaque inférieure (31) est h2, dans lequel un rapport de h1 à h2 va de 0,05 à 0,1 ; et
l'élément de protection (40) présente une première paroi latérale (46), la première paroi latérale (46) est disposée au niveau d'une extrémité de l'élément de protection (40) éloignée de l'ensemble couvercle d'extrémité (10), et un rapport entre une distance entre l'élément de cloisonnement (30) et la première paroi latérale (46) et une dimension de l'élément de protection (40) dans une direction de longueur de l'élément de cloisonnement (30) va de 0,1 à 0,15.

2. Appareil de stockage d'énergie (100) selon la revendication 1, dans lequel
le trou traversant (34) est un trou circulaire, et un rapport entre un diamètre du trou traversant (34) et une distance entre une surface de paroi externe de la plaque supérieure (32) et la surface de paroi externe de la plaque inférieure (31) va de 0,03 à 0,05.

3. Appareil de stockage d'énergie (100) selon la revendication 1, dans lequel
le trou traversant (34) comporte deux ensembles de sous-trous traversants, chacun des deux ensembles de sous-trous traversants pénètre à travers l'une des deux plaques latérales (33), et les deux ensembles de sous-trous traversants sont positionnés l'un dirigé vers l'autre dans la direction de longueur de l'élément de cloisonnement (30).

4. Appareil de stockage d'énergie (100) selon la revendication 1 ou 2, dans lequel l'élément de cloisonnement (30) est doté d'une première saillie (35) et d'une seconde saillie (36), la première saillie (35) et la seconde saillie (36) sont positionnées en saillie à partir des deux plaques latérales (33) respectivement et en direction de l'évidement traversant (37), et dans la direction de longueur de l'élément de cloisonnement (30), la première saillie (35) et la seconde saillie (36) sont positionnées l'une dirigée vers l'autre ;
l'ensemble électrode (20) est mis en œuvre sous la forme de deux ensembles électrodes, les deux ensembles électrodes (20) sont empilés dans une direction d'épaisseur de l'ensemble électrode (20), une première partie concave (26A) et une seconde partie concave (26B) sont définies entre les deux ensembles électrodes (20), et la première partie concave (26A) et la seconde partie concave (26B) sont positionnées l'une à l'opposé de l'autre dans une direction de largeur de l'ensemble électrode (20) ;
la première saillie (35) est insérée dans la première partie concave (26A) et est configurée pour assurer l'étanchéité d'un espace entre les deux ensembles électrodes (20), et des surfaces de la première saillie (35) sont en butée contre une partie de surfaces externes des deux ensembles électrodes (20) entre lesquelles la première partie concave (26A) est définie ; et
la seconde saillie (36) est insérée dans la seconde partie concave (26B) et est configurée pour assurer l'étanchéité de l'espace entre les deux ensembles électrodes (20), et des surfaces de la seconde saillie (36) sont en butée contre une partie de surfaces externes des deux ensembles électrodes (20) entre lesquels la seconde partie concave (26B) est définie.

5. Appareil de stockage d'énergie (100) selon la revendication 4, dans lequel la première saillie (35) et la seconde saillie (36) sont formées d'un seul tenant avec les deux plaques latérales (33) respectivement.

6. Appareil de stockage d'énergie (100) selon la revendication 1 ou 2, dans lequel l'élément de cloisonnement (30) et l'élément de protection (40) sont formés d'un seul tenant.

7. Appareil de stockage d'énergie (100) selon la revendication 1, dans lequel l'élément de cloisonnement (30) est en outre doté d'une soupape unidirectionnelle, et dans la direction d'épaisseur de l'élément de cloisonnement (30), une projection orthographique de la soupape unidirectionnelle couvre complètement une projection orthographique du trou traversant (34) ; la soupape unidirectionnelle est configurée pour ne permettre qu'un écoulement de fluide de la première sous-cavité de réception (41A) vers la seconde sous-cavité de réception (41B) .

8. Module de stockage d'énergie, comportant une pluralité d'appareils de stockage d'énergie (100) selon l'une quelconque des revendications 1 à 7, la pluralité d'appareils de stockage d'énergie (100) étant connectés électriquement.

9. Dispositif de consommation d'électricité, comportant le module de stockage d'énergie selon la revendication 8, le module de stockage d'énergie étant configuré pour fournir une puissance au dispositif consommateur de puissance.
